# FASCICULE DE BREVET EUROPEEN

(11) **EP 3 073 447 B1**
(45) Date de publication et mention de la délivrance du brevet: **01.02.2023**
(21) Numéro de dépôt: 15161179.5
(22) Date de dépôt: 26.03.2015
(51) Int. Cl.: G07C 1/22

(54) **PROCÉDÉ ET SYSTÈME DE MESURE D'UN TEMPS DE PASSAGE, ET MODULE À TRANSPONDEUR DU SYSTÈME**
MESSVERFAHREN UND -SYSTEM EINER DURCHLAUFZEIT, UND TRANSPONDERMODUL FÜR DIESES SYSTEM
METHOD AND SYSTEM FOR MEASURING A TRANSIT TIME, AND TRANSPONDER MODULE OF THE SYSTEM

(43) Date de publication de la demande: 28.09.2016
(73) Titulaire: Swiss Timing Ltd., 2606 Corgémont (CH)
(72) Inventeur: Zanetta, André, 2075 Wavre (CH); Coron, Gaël, 1741 Cottens (CH); Galli, Reto, CH-3053 Münchenbuchsee (CH)
(74) Mandataire: ICB SA

(56) Documents cités:
- EP-A1- 0 435 055
- EP-A1- 2 453 415
- EP-A1- 2 747 036
- EP-A2- 1 376 272
- EP-B1- 1 447 681
- US-A- 5 511 045
- US-A1- 2008 074 954
- US-A1- 2009 303 005

## Description

### Domaine de l'invention

L'invention concerne un procédé de mesure ou détermination d'au moins un temps de passage sur une ligne de passage d'au moins un objet en mouvement via un module à transpondeur dans une compétition sportive. Pour une compétition sportive dans un système de mesure, chaque objet en mouvement, tel qu'un compétiteur, est muni d'un module à transpondeur, qui lui est personnalisé pour la détermination d'un temps de course ou de passage d'une ligne de passage.

L'invention concerne également un système de mesure ou détermination d'au moins un temps de passage pour la mise en oeuvre du procédé.

L'invention concerne également un module à transpondeur pour le système de mesure ou détermination d'au moins un temps de passage.

### Arrière-plan de l'invention

Dans une compétition sportive, il doit souvent être utilisé plusieurs dispositifs pour la détection et la conservation du temps mesuré d'une course, afin de garantir une bonne fonctionnalité du système de mesure. Ces dispositifs doivent encore garantir une bonne précision de mesure et une sécurité de la mesure pour pouvoir réaliser un système de mesure automatisé. Les dispositifs utilisés dans un tel système de mesure sont par exemple des bandes de contact, des caméras, des cellules photo-électriques et des transpondeurs.

Il est encore à noter que si l'écart temporel entre athlètes est en dessous de la précision des transpondeurs utilisés, il doit être utilisé aussi une opération manuelle de contrôle. Le système de mesure conventionnel ne peut donc pas être entièrement automatisé, ce qui constitue un inconvénient.

Le brevet US 5,511,045 décrit un appareil et un système pour la mesure du temps d'objets en mouvement, tels que des sportifs lors d'une compétition sportive. Une mesure du temps de chaque compétiteur depuis le départ jusqu'à l'arrivée, ainsi qu'une mesure de temps intermédiaires sont effectuées par le système de mesure. Un ou plusieurs émetteurs/récepteurs sont disposés en des points du parcours de course pour capter les informations provenant de transpondeurs personnalisés portés par les compétiteurs. Chaque transpondeur peut être intégré dans une montre portée au poignet de chaque compétiteur. Quand chaque transpondeur détecte un signal de détection provenant d'un émetteur, une transmission du code d'identification est opérée par le transpondeur pour être capté par un récepteur au passage d'une ligne du compétiteur. Cela permet au récepteur de déterminer le temps pour chaque compétiteur sur la base du code d'identification reçu. Aucune autre information n'est transmise par chaque transpondeur pour déterminer précisément le temps de passage sur une ligne intermédiaire ou d'arrivée. Cela constitue un inconvénient de ce système de mesure.

On peut citer également le brevet EP 1 447 681 B1, qui décrit un système de détermination d'un temps de passage. Le système de détermination comprend un agencement générateur de signaux de champ magnétique, des transpondeurs personnalisés portés chacun par un objet en mouvement, tel qu'un compétiteur, et un récepteur de signaux reçus des transpondeurs. Chaque transpondeur mesure plusieurs intensités d'un champ magnétique émis sur chaque ligne de passage par l'agencement générateur de signaux. Une transmission de ces intensités et des temps associés est effectuée par chaque transpondeur de manière à permettre au récepteur de déterminer un temps de passage. Cependant aucune référence de temps absolue n'est définie de manière à permettre à un moyen de traitement du récepteur de reconstruire le motif du champ magnétique et ainsi déterminer précisément le temps réel de passage de chaque transpondeur. De plus, le temps déterminé du passage de chaque transpondeur est déterminé sur la base d'échantillons d'intensités de champ magnétique prélevés en des temps aléatoires, ce qui constitue une difficulté supplémentaire de déterminer précisément le temps de passage. Cela constitue plusieurs inconvénients de ce système de détermination d'un temps de passage.

La demande de brevet EP 2 747 036 A1 décrit un procédé et un système pour la mesure d'un temps dans une compétition sportive avec au moins un module à transpondeur personnalisé placé sur le compétiteur. Ledit module peut être activé soit au départ de la course, soit dans des positions intermédiaires du parcours de course ou à l'arrivée. Une variation de mouvement est détectée par un capteur de mouvement dudit module à au moins un point de passage. Les mesures du mouvement peuvent être transmises du module à une unité à décodeur pour contrôler un temps de passage. Cependant, il est difficile de mesurer précisément le temps de passage d'un ou plusieurs modules activés à un point de passage défini, ce qui constitue un inconvénient.

### Résumé de l'invention

L'invention a donc pour but de pallier les inconvénients de l'état de la technique susmentionné en proposant un procédé de mesure d'au moins un temps de passage sur une ligne de passage d'un objet en mouvement, notamment dans une compétition sportive, via un module à transpondeur personnalisé sur l'objet en mouvement. Le temps de passage peut ainsi être déterminé très précisément et de manière automatique.

A cet effet, l'invention concerne un procédé de mesure d'au moins un temps de passage sur une ligne de passage d'au moins un objet en mouvement via un module à transpondeur, qui comprend les caractéristiques définies dans la revendication indépendante 1.

Des étapes particulières du procédé de mesure d'au moins un temps de passage sur une ligne de passage sont définies dans les revendications dépendantes 2 à 18.

Un avantage du procédé de mesure d'au moins un temps de passage sur une ligne de passage notamment d'un compétiteur dans une compétition sportive réside dans le fait que le signal de champ électromagnétique à basse fréquence transmet au moins une commande de synchronisation pour chaque module à transpondeur, afin de le réveiller et lui permettre d'effectuer les mesures d'intensités.

Avantageusement, chaque module à transpondeur s'approchant d'une ligne de passage peut être synchronisé par un signal de champ électromagnétique à basse fréquence, par exemple à 125 kHz, modulé en tout ou rien (ON-OFF Keying en terminologie anglaise). Une fois synchronisé, le module à transpondeur mesure l'intensité du champ électromagnétique capté à des intervalles de temps réguliers et durant lesquels le signal de champ électromagnétique n'est pas modulé et généré avec une fréquence et amplitude fixes ou constantes. Avec cela, une meilleure précision du temps de passage sur une ligne de passage est obtenue, ce qui permet également d'éviter des mesures erronées notamment par un signal de champ électromagnétique modulé. Chaque module à transpondeur capable de détecter le signal de champ électromagnétique, est réveillé et synchronisé, de manière à avoir plusieurs modules à transpondeurs réveillés et synchronisés à une station de traitement des données commandant une unité de génération du signal de champ électromagnétique.

Avantageusement, le module à transpondeur est réveillé seulement par un signal de champ électromagnétique à basse fréquence, qui peut être à une fréquence porteuse entre 100 kHz et 150 kHz. Ce signal de champ électromagnétique contient un message de synchronisation modulé en tout ou rien OOK (ON-OFF Keying en terminologie anglaise). La batterie ne sera donc pas déchargée inutilement en présence d'un champ électromagnétique perturbateur dans les fréquences entre 100 kHz à 150 kHz.

Avantageusement, chaque transpondeur réveillé et synchronisé mesure un ou plusieurs groupes successifs de mesures d'intensité du champ électromagnétique de préférence au moyen d'une antenne triaxiale à des intervalles de temps réguliers. L'orientation du module à transpondeur sur l'athlète peut ainsi être corrigée par l'algorithme embarqué dans la station de traitement des données. Cela permet pour certaines compétitions de corriger le temps de passage sur la ligne en fonction de la position du module à transpondeur sur l'objet en mouvement. Ces mesures sont transmises par paquet avant le passage de la ligne, notamment de la ligne d'arrivée de manière à permettre de prédire le passage de ladite ligne. En déterminant dans l'unité à décodeur du système la variation du champ en fonction des groupes de mesures reçus du module à transpondeur, il est possible de déterminer précisément le temps de passage sur la ligne du compétiteur. Ceci évite que le dispositif de chronométrage du temps de course revienne en arrière lors de la détermination réelle du temps de passage à afficher. Cependant le temps exact de passage est déterminé encore après le passage de ladite ligne de passage.

Chaque module à transpondeur réveillé et synchronisé transmets directement chaque groupe de mesures d'intensité du champ électromagnétique, définissant un paquet de données relatif à chaque temps ou intervalle déterminé de mesure. Au moins deux, trois ou quatre groupes de mesures d'intensité doivent être reçus par l'unité à décodeur pour déterminer le temps de passage de la ligne de passage. Par la réception des différents groupes de mesures, il est possible de prédire le temps réel de passage de la ligne de passage étant donné que le ou les groupes de mesures d'intensité sont des mesures précédant le passage de la ligne de passage et de préférence entre 50 à 100 ms avant le passage réel de la ligne de passage par le module à transpondeur.

Avantageusement, une fois que chaque module à transpondeur a passé la ligne de passage, une commande de l'unité à décodeur par un signal de commande à haute fréquence UHF peut être transmise au module à transpondeur afin de le désactiver et ainsi le mettre en position de repos.

A cet effet, l'invention concerne également un système de mesure d'au moins un temps de passage d'au moins un module à transpondeur convenant à la mise en oeuvre du procédé de mesure d'un temps de passage sur une ligne de passage, qui comprend les caractéristiques définies dans la revendication indépendante 19.

Des formes d'exécution particulières du système de mesure sont définies dans les revendications dépendantes 20 à 22.

A cet effet, l'invention concerne aussi un module à transpondeur d'un système de mesure convenant à la mise en oeuvre du procédé de mesure d'un temps de passage sur une ligne de passage, qui comprend les caractéristiques définies dans la revendication indépendante 23.

Des formes d'exécution particulières du module à transpondeur sont définies dans la revendication dépendante 24.

Avantageusement, le module à transpondeur peut être du type actif, mais réveillé dès la détection du signal basse fréquence de champ électromagnétique avec la commande de réveil et de synchronisation provenant d'une unité d'émission du système de mesure.

### Brève description des dessins

Les buts, avantages et caractéristiques du procédé de mesure d'au moins un temps de passage sur une ligne de passage d'au moins un objet en mouvement via un module à transpondeur dans un système de mesure automatisé, le système et le module à transpondeur pour sa mise en oeuvre selon l'invention apparaîtront mieux dans la description suivante d'au moins une forme d'exécution non limitative illustrée par les dessins sur lesquels :
la figure 1 représente schématiquement un système de mesure automatisé, qui comprend plusieurs modules à transpondeur pour la mise en oeuvre du procédé de mesure d'au moins un temps de passage sur une ligne de passage dans une compétition sportive selon l'invention,
la figure 2 représente une forme d'exécution d'un module à transpondeur pour la mise en oeuvre du procédé de mesure d'au moins un temps de passage sur une ligne de passage selon l'invention, et
la figure 3 représente un graphe des signaux du champ électromagnétique à basse fréquence et des signaux de transmission ou réception du module à transpondeur à haute fréquence du système de mesure d'un temps de passage selon l'invention.

### Description détaillée de l'invention

Dans la description suivante, tous les éléments du système de mesure et du module à transpondeur pour la mise en oeuvre du procédé de mesure d'un temps de passage sur une ligne de passage, qui sont bien connus de l'homme du métier dans ce domaine technique, ne seront relatés que de manière simplifiée.

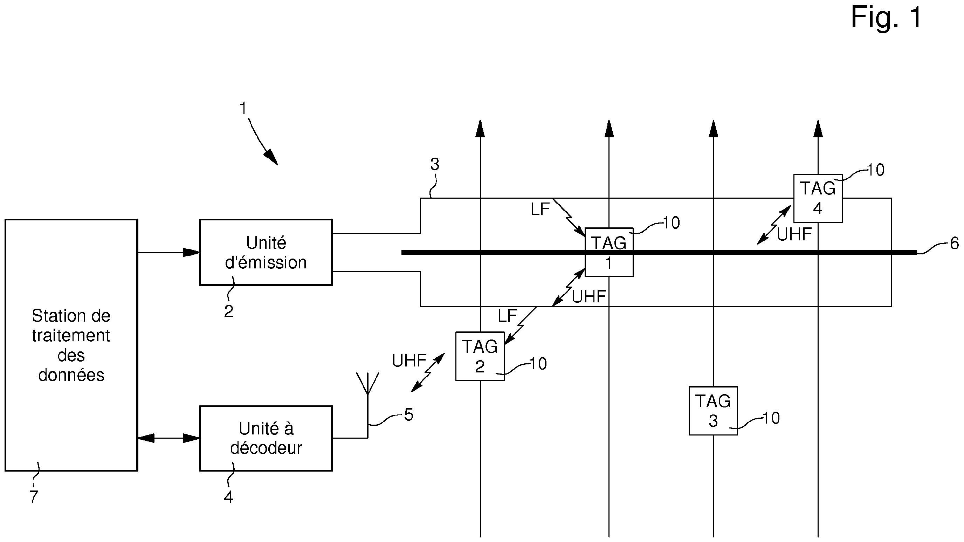

La figure 1 représente schématiquement un système de mesure automatisé 1, qui peut être utilisé dans tout type de compétition sportive principalement pour déterminer un temps de course ou un ordre de passage d'un objet en mouvement. Ce système de mesure 1 peut par exemple être utilisé pour une compétition d'athlétisme, une course de vélo, une course de chevaux, une course automobile ou une autre compétition sportive. Cet objet en mouvement peut être un compétiteur, un cheval, un vélo, un véhicule.

Le système de mesure 1 comprend de préférence au moins une unité d'émission 2 pour la génération d'un signal basse fréquence LF, qui est un signal de champ électromagnétique émis par une antenne d'émission 3 disposée au sol ou sur le côté de la ligne ou en dessus. Le système comprend également un ou plusieurs modules à transpondeur 10, définis comme TAG1, TAG2, TAG3, TAG4 susceptibles d'être disposés chacun sur un objet en mouvement, tel qu'un compétiteur ou un cheval de course ou un vélo ou une voiture. Chaque module à transpondeur 10 est personnalisé à l'objet, sur lequel il est placé. Le système comprend enfin une unité de réception ou unité à décodeur 4 pour recevoir par une antenne de réception 5 des signaux à haute fréquence UHF transmis par les modules à transpondeur activés pour la détermination d'un temps de passage d'une ligne de passage 6. L'unité d'émission 2 et l'unité à décodeur 4 sont reliées à et commandées par une station de traitement des données 7.

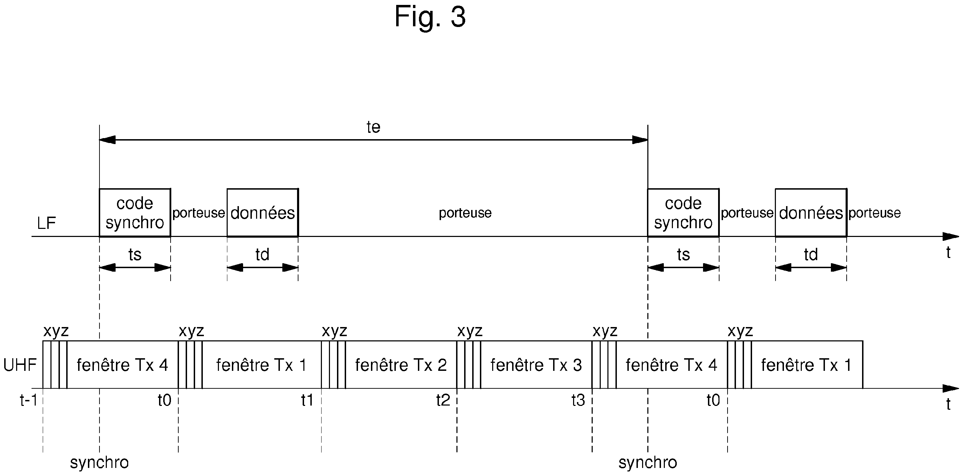

Comme précisé plus en détail par la suite en référence à la figure 3, chaque module à transpondeur 10 s'approchant de la ligne de passage peut être réveillé et synchronisé par le signal de champ électromagnétique modulé. Pour ce faire, dans chaque période de répétition te, l'antenne 3 émet un signal de champ électromagnétique avec une modulation d'au moins une commande de synchronisation et réveil du module à transpondeur en mouvement. Pour cette première modulation du signal de champ électromagnétique au début de chaque période de répétition te, un code d'identification de l'antenne peut aussi être modulé pour définir de quelle antenne provient le signal de champ électromagnétique pour le module à transpondeur le détectant. Après l'émission des commandes de réveil, de synchronisation et par la suite l'émission de données, le signal de champ électromagnétique généré LF ne varie plus en fréquence et en amplitude pour permettre la mesure de l'intensité du champ électromagnétique par chaque module à transpondeur activé.

Le module à transpondeur personnalisé 10 est de préférence un module à transpondeur du type actif, c'est-à-dire muni d'une batterie pour l'alimentation électrique des composants le constituant. Cependant pour réduire sa consommation électrique, il est généralement dans un mode de repos. Dans la forme d'exécution présentée à la figure 1, chaque module à transpondeur 10 peut être activé principalement, quand il reçoit la commande de réveil et de synchronisation dans le signal basse fréquence modulé LF émis par l'antenne d'émission 3 de l'unité d'émission 2 du système de mesure 1. Le signal de champ électromagnétique à basse fréquence LF émis par ladite unité d'émission 2 peut être par exemple à une fréquence porteuse de l'ordre de 125 kHz. Cette unité d'émission peut être contrôlée de manière conventionnelle par la station de traitement des données 7 du système de mesure 1. Elle peut transmettre le signal basse fréquence LF avec des périodes de modulation de préférence en tout ou rien (ON-OFF Keying en terminologie anglaise) de commandes de réveil et de synchronisation par l'antenne d'émission 3 durant toute la durée de la compétition.

L'antenne d'émission 3 peut être disposée dans ou sur le sol du tracé de la course, ou en dessus ou sur le côté ("side antenna" en terminologie anglaise). Elle peut être de préférence centrée sur une ligne de passage 6, qui peut être une ligne de passage intermédiaire ou une ligne d'arrivée comme montré à la figure 1. Elle peut s'étendre sur toute la largeur du tracé de course. La largeur de l'antenne d'émission 3 peut se situer entre 10 cm et 2 m, la largeur normale pouvant être de 60 cm.

Dans le cas d'une antenne de côté disposée au niveau de la ligne de passage 6, cette antenne de côté peut avoir une dimension de 1 m sur 1 m ou inférieure, telle que 60 cm sur 60 cm, ou une autre dimension selon les compétitions sportives. Cette antenne peut détecter le passage de compétiteurs sur une largeur du tracé de course de maximum 10 m. Cette antenne est ainsi positionnée verticalement sur le côté du tracé de course et permet de mesurer le passage de compétiteurs entre 0 m et 10 m.

Il est à noter que plusieurs antennes d'émission peuvent aussi être placées à différents endroits du parcours de course et reliées chacune à une propre unité de génération de signaux de champ électromagnétique. Ceci permet la détermination de temps intermédiaires et de temps d'arrivée de la course pour chaque objet en mouvement portant un module à transpondeur personnalisé.

Généralement chaque module à transpondeur 10 peut être activé par la modulation de la commande de réveil et de synchronisation dans le signal basse fréquence émis par l'antenne d'émission à une distance voisine de 2 à 4 m de la ligne de passage. Plus le module à transpondeur 10 s'approche de la ligne de passage 6, telle que la ligne d'arrivée, et plus le niveau du signal basse fréquence LF sans modulation et à fréquence stable, capté par le module à transpondeur augmente.

Le niveau du signal à basse fréquence LF capté par le module à transpondeur varie en fonction de la position et de la distance par rapport au centre de l'antenne. Un algorithme d'analyse du signal permet de déterminer la position du module à transpondeur par rapport à la ligne de passage 6, qui peut être la ligne d'arrivée ou une ligne sur le tracé de course. Différentes mesures de l'intensité du champ électromagnétique capté par le module à transpondeur sont transmises dans au moins un signal de mesure directement après chaque mesure ou par paquet de mesures de préférence avant le passage de la ligne de passage ou d'arrivée. Dans ces conditions, cela permet à l'unité à décodeur 4 en liaison à la station de traitement des données 7 de déterminer le temps de passage du module à transpondeur en mouvement en prédisant le temps réel avant le passage de ladite ligne 6. Cette prédiction est nécessaire pour éviter que le chronomètre du temps de course revienne en arrière lors de l'affichage du temps réel de chaque compétiteur.

Comme il est représenté sur la figure 1, le premier module à transpondeur TAG1 se trouve sur la ligne de passage 6, qui peut être la ligne d'arrivée. Il est réveillé et synchronisé par le signal basse fréquence LF modulé de l'antenne d'émission 3. Le second module à transpondeur TAG2 se trouve à une distance proche de l'antenne d'émission 3. Il peut également être réveillé et synchronisé par le signal basse fréquence LF modulé de l'antenne d'émission 3, même si le niveau dudit signal basse fréquence LF capté est à un bas niveau. Le troisième module à transpondeur TAG3 se trouve à une distance éloignée de l'antenne d'émission 3. Ainsi, le troisième module à transpondeur n'est pas en mesure d'être réveillé et synchronisé par le signal basse fréquence LF modulé de l'antenne d'émission 3 et reste dans un mode de repos. Le quatrième module à transpondeur TAG4 est montré ayant passé la ligne d'arrivée et dans ce cas, il est en mesure de recevoir une commande de l'unité à décodeur 4 pour le désactiver et le placer dans un mode de repos.

Si chaque module à transpondeur 10 n'est pas réveillé et synchronisé par le signal basse fréquence LF de l'antenne d'émission 3, il reste dans un mode de repos. Par contre si le module à transpondeur est activé et synchronisé, il peut mesurer plusieurs niveaux d'intensité du champ électromagnétique et transmettre les niveaux d'intensité à une unité à décodeur 4 avant le passage de la ligne de passage 6. Le temps de passage ou d'arrivée de l'objet en mouvement dans l'unité à décodeur 4 est obtenu par le calcul par exemple de la valeur maximale du champ capté par le module à transpondeur et reconstruit dans l'unité à décodeur 4 ou dans la station de traitement des données 7.

Le signal de mesure ou d'information est transmis par le module à transpondeur 10 pour être capté par l'antenne de réception 5 de l'unité à décodeur 4 du système de mesure 1. Ce signal d'information UHF peut être d'une fréquence située entre 300 MHz et 3'000 MHz, ou d'autres fréquences en dehors de cette bande de fréquences. La transmission du signal UHF du module à transpondeur vers l'unité décodeur peut se faire sur une fréquence porteuse, choisie parmi N fréquences porteuses à choix, où N est un nombre entier supérieur à 1. Il peut être prévu 8 fréquences porteuses à choix (variante du "Frequency Hopping" en terminologie anglaise). Les données envoyées par le module à transpondeur sont donc divisées par paquets. Le premier paquet d'une ou plusieurs mesures ou d'un ou plusieurs groupes de mesures d'intensité du champ électromagnétique, est envoyé par exemple sur la fréquence *fₙ*, alors que le paquet suivant est transmis sur une autre fréquence *fₘ* parmi les 8 fréquences à choix.

L'information transmise par le module à transpondeur peut être précise, car chaque module à transpondeur est synchronisé par le signal de champ électromagnétique modulé pour effectuer les différentes mesures d'intensité à des intervalles de temps réguliers. De plus avec la transmission sur plusieurs fréquences, cela permet d'augmenter le nombre de modules à transpondeur capables d'être détectés simultanément par l'unité à décodeur, et d'éviter le risque de collision entre les communications UHF. Chaque module à transpondeur suit la même séquence de saut, mais la fréquence de départ est assignée de façon pseudo-aléatoire. On peut compter par exemple jusqu'à plus de 20 modules à transpondeur, voire 50 modules à transpondeur selon les configurations, au passage d'une ligne de passage. Dans le cas d'une communication de plusieurs groupes de mesures d'intensité depuis chaque module à transpondeur, il peut être même prévu de détecter par exemple près de 24 modules à transpondeur passant ladite ligne de passage.

L'unité à décodeur 4 est reliée à la station de traitement des données 7 du système de mesure 1. Cette station de traitement 7 peut être utilisée pour le traitement des informations de l'unité à décodeur 4 et l'affichage des différents temps des coureurs, chevaux ou véhicules avec leur classement. L'unité à décodeur 4 peut aussi être utilisée pour programmer chaque module à transpondeur 10 par une transmission d'un signal à haute fréquence avec modulation numérique ou GFSK des données ou commandes. Sur cette figure 1, il n'est pas représenté une éventuelle deuxième antenne pour effectuer une transmission vers le module à transpondeur. Le signal transmis par l'unité à décodeur 4 peut aussi servir à personnaliser ledit module par exemple au coureur respectif. De plus, le signal UHF transmis par l'unité à décodeur 4 peut aussi permettre de désactiver chaque module à transpondeur une fois que la ligne de passage a été passée par ledit objet en mouvement avec le module à transpondeur.

Il est encore à noter qu'après le passage de la ligne de passage du module à transpondeur activé, le signal UHF transmis par l'unité à décodeur vers le module à transpondeur peut comprendre des informations relatives au compétiteur, notamment son classement, son temps, voire même sa disqualification. L'unité à décodeur 4 peut encore envoyer un message dans le signal UHF au module à transpondeur pour connaître le niveau de la batterie ou l'état de fonctionnement du module à transpondeur. Une fois reçu ce signal d'information UHF par l'unité à décodeur, il peut être prévu que le module à transpondeur communique cette information au porteur dudit module par au moins une source LED, un écran d'affichage, un avertisseur sonore ou un vibreur. Dans ce cas de figure, cela peut s'appliquer à une course de vélo sur piste, dans laquelle le dernier concurrent de chaque tour peut recevoir l'information d'une disqualification. Cette information peut être signalée par une source lumineuse LED de type rouge au niveau de guidon de son vélo.

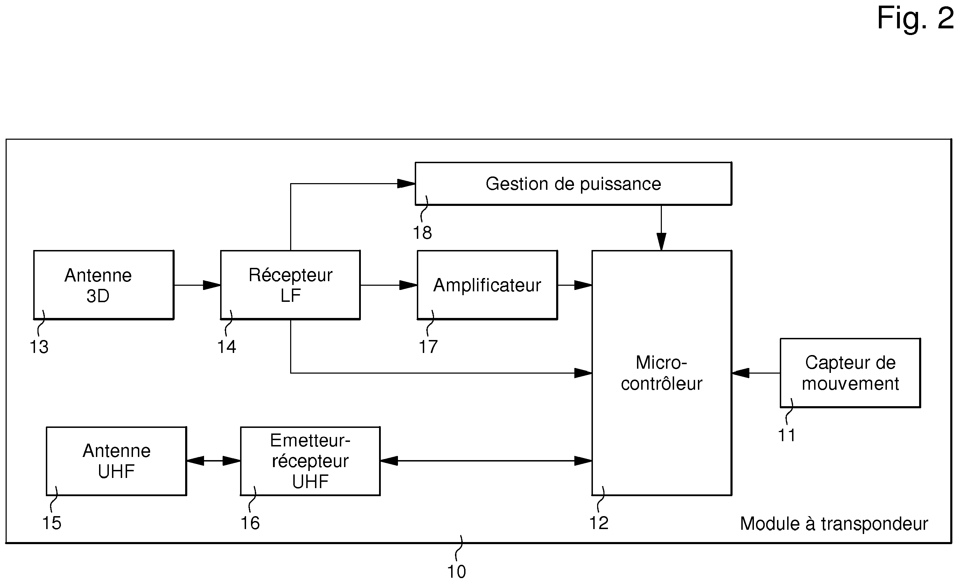

Une forme d'exécution du module à transpondeur 10, qui peut être utilisé pour tout type de compétition sportive, est représentée à la figure 2. Le module à transpondeur 10 peut comprendre un récepteur de signaux à basse fréquence 14 pour recevoir des signaux à basse fréquence, tels que des signaux de champ électromagnétique, par une antenne 13, qui peut être une antenne à un seul axe, ou à deux axes ou de préférence triaxiale. Le module à transpondeur peut être du type actif avec une batterie pour l'alimentation électrique des composants électroniques du module à transpondeur. Pour réduire la consommation électrique du module à transpondeur, une unité de gestion de puissance 18 peut être prévue. La batterie peut faire partie de cette unité de gestion ou y être reliée. L'unité de gestion permet de commander l'alimentation électrique des composants électroniques du module. Normalement l'unité de gestion de puissance 18 permet de commander l'alimentation électrique dès la réception d'une commande de réveil et de synchronisation d'un signal basse fréquence par le module à transpondeur.

Le module à transpondeur comprend encore un émetteur ou un émetteur-récepteur haute fréquence 16 pour la transmission de signaux UHF par une antenne 15 ou ensemble d'antennes avec couplage électromagnétique d'un ou plusieurs signaux d'information. Ces signaux d'information sont à une fréquence porteuse située entre 300 MHz et 3'000 MHz, ou d'autres fréquences en dehors de cette bande de fréquences. Le ou les signaux d'information sont transmis sur commande d'un microcontrôleur 12 à une unité à décodeur 4 d'un système de mesure 1 de la figure 1. De préférence, le module à transpondeur peut encore comprendre une base de temps en liaison avec le microcontrôleur 12, qui peut être synchronisée par le signal de champ électromagnétique LF modulé et capté.

Le module à transpondeur peut encore comprendre un capteur de mouvement 11, tel qu'un accéléromètre pour faciliter et améliorer la détermination d'un temps de course. Ce capteur de mouvement 11 est relié au microcontrôleur 12. Dans le cas d'une compétition sportive, telle qu'une course à vélo sur piste, la ligne de passage peut comprendre une bande d'une certaine épaisseur. Le capteur de mouvement du module à transpondeur disposé sur le cadre du vélo peut détecter une variation brutale du mouvement suite au choc de la roue de vélo sur ladite bande de passage. Ainsi, il peut fournir une information dans un signal UHF transmis par le module à transpondeur 10 en combinaison de chaque mesure d'intensité ou d'un ou plusieurs groupes de mesures d'intensité du champ électromagnétique capté à l'unité à décodeur 4.

Le récepteur de signaux à basse fréquence 14 du module à transpondeur 10 est relié au microcontrôleur 12 et à l'unité de gestion de puissance 18. En sortie, le récepteur est encore relié à un amplificateur 17, qui fournit un signal de réception amplifié au microcontrôleur 12 pour la mesure du niveau du champ capté par le module à transpondeur. Ceci permet d'augmenter la dynamique de mesure. Ainsi il est possible de capter de très petits signaux à basse fréquence ou de très forts signaux à basse fréquence.

Une fois activé, le module à transpondeur 10 peut mesurer par l'antenne triaxiale 13 un ou plusieurs groupes successifs de mesures d'intensité du champ électromagnétique capté sans modulation. Un groupe de mesures d'intensité comprend trois mesures du champ électromagnétique selon les axes X, Y, Z capté par l'antenne triaxiale à un temps donné. Chaque groupe de mesures d'intensité du champ électromagnétique, définit un paquet de données ou un point de données relatif à chaque temps déterminé de mesure. Ces mesures selon les trois axes de mesure sont généralement définies par un circuit d'indication de force du signal reçu. Chaque groupe de mesures d'intensité obtenu peut être mémorisé dans le module à transpondeur et/ou transmis directement dans un signal d'information UHF à l'unité à décodeur. De préférence, il est obtenu deux, trois, quatre ou plus de groupes de mesures d'intensité à des intervalles de temps réguliers, qui sont mémorisés et/ou transmis ensemble dans un paquet de données par le signal d'information UHF à l'unité à décodeur 4.

Avec les différents groupes de mesures d'intensité obtenus avant le passage de la ligne de passage et reçus, l'unité à décodeur 4 en liaison avec la station de traitement des données est en mesure de reconstruire le champ électromagnétique et ainsi déterminer précisément le temps de passage ou d'arrivée de l'objet en mouvement. En général plus le module à transpondeur s'approche du centre de l'antenne émettrice et plus le champ capté sans modulation est fort. Le temps de course est précisément déterminé, étant donné la bonne synchronisation entre la station de traitement des données et chaque module à transpondeur activé.

Il est encore à noter que pour la détermination du temps de passage, l'unité à décodeur peut capter plusieurs paquets successifs transmis par chaque module à transpondeur activé et obtenus chacun dans chaque période de répétition de la modulation du signal de champ électromagnétique LF. Il peut donc être prévu de transmettre chaque paquet successivement de trois ou quatre groupes de mesures d'intensité entre chaque transmission d'un code ou commande de réveil et synchronisation de l'unité d'émission du signal de champ électromagnétique modulé.

Pour comprendre le fonctionnement du système de mesure d'au moins un temps de passage d'une ligne de passage d'un objet en mouvement muni d'un module à transpondeur personnalisé, il est décrit en référence à la figure 3 le procédé de mesure d'un temps de passage. Comme on peut le remarquer sur la figure 3, l'unité d'émission de la station de mesure, génère un signal de champ électromagnétique LF à fréquence porteuse de l'ordre de 125 kHz. Ce signal de champ électromagnétique est modulé par exemple en tout ou rien OOK pour transmettre une commande de réveil et de synchronisation de durée ts, au début de chaque période te. La modulation initiale du signal de champ électromagnétique LF, qui peut comprendre aussi le code d'identification de l'antenne d'émission en plus du code ou commande de réveil et du code ou commande de synchronisation, s'effectue sur une courte période ts par rapport à une période de répétition te de cette modulation dudit signal de champ électromagnétique.

Après cette modulation du signal de champ électromagnétique, il y a une période dans laquelle le signal de champ électromagnétique est généré par l'unité d'émission sans modulation avec une fréquence et une amplitude constantes. C'est dans cette première période sans modulation, que chaque module à transpondeur après avoir été activé et synchronisé peut effectuer une première mesure d'intensité du champ électromagnétique au temps t0. De préférence à ce premier temps t0, il est opéré trois mesures simultanées d'intensité du champ électromagnétique par l'antenne triaxiale du module à transpondeur, pour définir un premier groupe de mesures d'intensité selon les trois axes X, Y, Z. Ce premier groupe de mesures d'intensité peut être transmis directement dans une première forme d'exécution à l'unité à décodeur dans une fenêtre temporelle Tx 1 ou être sauvegardé dans le module à transpondeur.

Durant cette première fenêtre temporelle Tx 1 de transmission du module à transpondeur, il peut y avoir une seconde modulation de données dans le signal de champ électromagnétique LF de durée td. Pour cette seconde modulation, il peut y avoir une information pour le module à transpondeur pour savoir sur quelle fréquence la communication UHF de l'unité à décodeur vers le module à transpondeur va avoir lieu après le passage de la ligne de passage par exemple. D'autres données peuvent également être transmises lors de cette seconde modulation de données dans le signal de champ électromagnétique.

Après la durée td de transmission de la seconde modulation du signal de champ électromagnétique, une période sans aucune modulation intervient jusqu'au terme de la période de répétition te des modulations dans le signal de champ électromagnétique LF. Durant cette période sans modulation, le module à transpondeur peut effectuer plusieurs autres mesures d'intensité du champ électromagnétique, qui peuvent être successivement et directement transmises à l'unité à décodeur ou être sauvegardées et transmises sous la forme d'un paquet de données par la suite. Ainsi un paquet de données peut être transmis dans chaque période de répétition de la modulation du signal de champ électromagnétique.

Les mesures d'intensité du champ électromagnétique sont effectuées dans des intervalles de temps réguliers après synchronisation du module à transpondeur. Une première mesure ou un premier groupe de mesures d'intensité dans le cas d'une mesure selon les trois axes de l'antenne triaxiale du module à transpondeur, sont effectués au premier temps t0, qui est un temps de référence dans chaque période de répétition te de modulation du champ électromagnétique LF. Par la suite, une seconde mesure ou un second groupe de mesures d'intensité sont effectués au second temps t1. Une troisième mesure ou un troisième groupe de mesures d'intensité peuvent encore être effectués au troisième temps t2. Finalement, une quatrième mesure ou un quatrième groupe de mesures d'intensité peuvent encore être effectués au quatrième temps t3.

L'écart temporel entre chaque temps déterminé de mesure t0, t1, t2 et t3 est identique ou régulier et synchronisé dès la réception de la commande de réveil et de synchronisation dans le signal de champ électromagnétique LF modulé. Chaque mesure ou groupe de mesures d'intensité peut être transmis directement dans une fenêtre temporelle respective de transmission Tx 1, Tx 2, Tx 3, Tx 4 depuis le module à transpondeur à l'unité à décodeur. Chaque fenêtre de transmission suit une mesure ou groupe de mesures. De préférence, le module à transpondeur transmet dans le signal modulé UHF un paquet de données, comprenant plusieurs mesures d'intensité successives ou plusieurs groupes de mesures d'intensité successifs. L'unité à décodeur en liaison avec la station de traitement est en mesure de savoir à quel moment ont été effectués les différentes mesures ou groupes de mesures de chaque paquet de données reçu, étant donné qu'une synchronisation de chaque module à transpondeur est commandée depuis l'unité d'émission sur commande de la station de traitement du système de mesure.

Plusieurs paquets de données peuvent être transmis avant le passage de la ligne de chaque module à transpondeur en mouvement et dans chaque période de répétition des modulations dans le signal de champ électromagnétique LF. Une fois passé la ligne de passage, par exemple la ligne d'arrivée, l'unité à décodeur peut transmettre par un signal modulé UHF une commande d'arrêt au module à transpondeur. Cette commande d'arrêt est de préférence reçue dans la première fenêtre de transmission du module à transpondeur après que l'unité à décodeur en liaison à la station de traitement a pu prédire le temps de passage sur ladite ligne. Cette commande d'arrêt est reçue par le module à transpondeur après tout envoi d'une mesure d'intensité ou d'un groupe de mesures d'intensité dans la première fenêtre. Le module à transpondeur est ainsi placé dans un mode de repos après réception de cette commande d'arrêt de manière à ne pas perturber la communication des autres modules à transpondeur n'ayant pas encore passé la ligne de passage. D'autres informations peuvent encore transmises par l'unité à décodeur au module à transpondeur comme mentionné précédemment.

Il est encore à noter qu'avec une même unité d'émission du signal de champ électromagnétique, plusieurs modules à transpondeur peuvent être réveillés et synchronisés, et de ce fait être aussi synchronisés entre eux. Des transmissions d'information entre des modules à transpondeurs activés peuvent aussi être prévues. Il peut ainsi être prévu d'ajouter un protocole de communication du type "Time Division Multiple Access au Frequency Hopping" en terminologie anglaise. Comme indiqué précédemment, cela permet d'augmenter le nombre de détections de modules à transpondeur en mouvement dans le système de mesure et par l'intermédiaire de l'unité à décodeur.

A titre d'exemple et sans limitation, il peut être prévu d'avoir des périodes de répétition te de modulation de la commande de synchronisation du signal de champ électromagnétique LF entre 10 et 20 ms, de préférence de l'ordre de 14 ms. La durée ts de la première modulation de synchronisation peut être entre 5 et 10 fois inférieure à la période de répétition t2, par exemple de l'ordre de 2 ms. Il en est de même pour la durée td de la seconde modulation. Cette seconde modulation peut intervenir après un temps inférieur de 4 à 6 fois la période de répétition te, de préférence après environ 3 ms du début de la période de répétition te. De préférence, cette seconde modulation intervient après une durée correspondant à la moitié de la durée de chaque modulation après la fin de la première modulation. La première mesure d'intensité ou le premier groupe de mesures d'intensité peut débuter juste après les 2 ms de la première modulation du signal de champ électromagnétique. L'écart temporel t1-t0, t2- t1, t3- t2 entre chaque temps de mesure est identique ou régulier et peut être d'une durée entre 3 et 6 fois inférieure à la période de répétition, de préférence correspondant au quart de la période de répétition te et valoir 3.5 ms. Ainsi il peut y avoir quatre mesures d'intensité ou quatre groupes de mesures d'intensité par période de répétition de la modulation du signal de champ électromagnétique. Mais bien entendu d'autres valeurs peuvent être prévues sans limiter la portée de l'invention.

Pour la transmission de chaque paquet de données depuis chaque module à transpondeur activé, chaque paquet peut comprendre dans le message un préambule UHF, un mot de synchronisation, une information de l'identification du transpondeur et de l'antenne émettrice, ainsi que l'état de la batterie ou l'écart temporel entre chaque mesure. Par la suite dans le message transmis, il est indiqué le premier groupe de mesures d'intensité à la première valeur de temps de référence t0. Il peut être transmis dans le même message à la suite du premier groupe de mesures, les différents mesures ou groupes de mesures aux différents temps de mesure t1, t2, t3. Cependant il peut être préféré de transmettre plutôt l'écart d'intensité par rapport à la mesure précédente d'intensité ou au groupe précédent de mesures d'intensités. Le message peut encore comprendre des valeurs de redondance de mesures ou groupes de mesures effectués avant le premier temps t0, par exemple au temps t-2 et/ou t-1. Le message transmis avec le paquet de données peut être d'une durée voisine de 2 ms.

Il est à noter que dans le cas d'une transmission directe de chaque mesure ou groupe de mesures d'intensité du champ électromagnétique, le message transmis peut comprendre le préambule UHF, un mot de synchronisation, une information de l'identification du transpondeur et de l'antenne émettrice, ainsi que l'état de la batterie ou l'écart temporel entre chaque mesure. Le message comprend par la suite la mesure ou le groupe de mesures d'intensité selon les axes X, Y, Z correspondant. Chaque message avec une seule mesure ou un seul groupe de mesures peut être d'une durée de l'ordre de 1 ms.

A partir de la description qui vient d'être faite, plusieurs variantes du procédé de mesure d'au moins un temps de passage d'une ligne de passage dans une compétition sportive peuvent être conçues par l'homme du métier sans sortir du cadre de l'invention définie par les revendications. Le module à transpondeur peut comprendre en plus un capteur magnétique pour déterminer la direction de passage de chaque ligne de passage par mesure du champ magnétique terrestre. Le nombre de fenêtres de transmission depuis le module à transpondeur par période de répétition de modulation du signal de champ électromagnétique peut être supérieur à 4.

## Revendications

1. Procédé de mesure d'au moins un temps de passage à une ligne de passage (6) d'au moins un objet en mouvement par l'intermédiaire d'un module à transpondeur (10) personnalisé et placé sur l'objet en mouvement, durant une compétition sportive dans un système de mesure (1), qui comprend au moins un module à transpondeur (10), au moins une unité d'émission (2) d'un signal de champ électromagnétique basse fréquence (LF) par une antenne (3) disposée au niveau de la ligne de passage (6) et une unité à décodeur (4) pour au moins recevoir au moins un signal de mesure à haute fréquence (UHF) de chaque module à transpondeur à proximité de la ligne de passage, le procédé comprenant des étapes consistant à :
- générer un signal de champ électromagnétique basse fréquence (LF) par l'unité d'émission (2), le signal de champ électromagnétique basse fréquence (LF) comprenant une modulation de commande de synchronisation et réveil au début de chaque période de répétition (te) de la modulation de commande de synchronisation et réveil,
- activer chaque module à transpondeur personnalisé (10) dès la première réception de la commande de synchronisation modulée dans le signal de champ électromagnétique basse fréquence (LF) par le module à transpondeur personnalisé (10),
- mesurer l'intensité du signal de champ électromagnétique basse fréquence (LF) capté par le module à transpondeur une fois réveillé et synchronisé, à des intervalles de temps réguliers par le module à transpondeur, en effectuant au moins une première mesure d'intensité ou un premier groupe de mesures d'intensité dans chaque période de répétition (te) de la modulation du signal de champ électromagnétique basse fréquence (LF) débutant après la fin de la modulation de commande de synchronisation et réveil, quand le signal de champ électromagnétique basse fréquence et sans modulation et généré avec une fréquence et une amplitude constantes par l'unité d'émission (2),
- transmettre par le module à transpondeur (10) directement au moins chaque mesure d'intensité ou au moins chaque premier groupe de mesures d'intensité à l'unité à décodeur (4) avant le passage de la ligne,
- prédire le temps réel de passage de chaque module à transpondeur (10) de la ligne de passage (6) par l'unité à décodeur (4) avant le passage de la ligne de passage (6) par le module de transpondeur (10) sur la base de la variation d'intensité du champ électromagnétique des mesures reçues du module à transpondeur.

2. Procédé de mesure selon la revendication 1, pour lequel chaque module à transpondeur (10) du système de mesure (1) comprend une antenne triaxiale (13) pour mesurer l'intensité du signal de champ électromagnétique basse fréquence selon trois axes et fournir un groupe de mesures d'intensité à chaque temps défini de mesure, **caractérisé en ce que** le module à transpondeur (10) transmet dans un signal de mesure directement chaque groupe de mesures d'intensité effectuées ou un paquet de différents groupes de mesures d'intensité effectuées successivement à des intervalles de temps réguliers à l'unité à décodeur (4) pour la détermination d'un temps de passage de la ligne de passage sur la base de la variation d'intensité du champ électromagnétique des groupes de mesures reçus du module à transpondeur.

3. Procédé de mesure selon la revendication 2, **caractérisé en ce que** la première mesure d'intensité ou le premier groupe de mesures d'intensité dans chaque période de répétition (te) de la modulation du signal de champ électromagnétique basse fréquence débute après la fin de la durée de cette première modulation, quand le signal de champ électromagnétique basse fréquence est sans modulation et généré avec une fréquence et une amplitude constantes par l'unité d'émission (2).

4. Procédé de mesure selon la revendication 3, **caractérisé en ce qu'**une première fenêtre (Tx 1) de transmission ou réception de signaux d'information du module à transpondeur est définie après la première mesure d'intensité ou le premier groupe de mesures d'intensité.

5. Procédé de mesure selon la revendication 3, **caractérisé en ce qu'**une seconde modulation de données intervient par période de répétition de modulation dans le signal de champ électromagnétique généré par l'unité d'émission après la première mesure d'intensité ou le premier groupe de mesures d'intensité.

6. Procédé de mesure selon la revendication 5, **caractérisé en ce que** les données dans la seconde modulation du signal de champ électromagnétique concernent une information sur une fréquence de communication UHF de l'unité à décodeur (4) vers le module à transpondeur (10) après le passage de la ligne de passage.

7. Procédé de mesure selon la revendication 5, **caractérisé en ce que** la durée de la première modulation est égale à la durée de la seconde modulation du signal de champ électromagnétique.

8. Procédé de mesure selon l'une des revendications 1 et 5, **caractérisé en ce que** chaque modulation du signal de champ électromagnétique est une modulation en tout ou rien.

9. Procédé de mesure selon la revendication 3, **caractérisé en ce qu'**au moins une seconde mesure d'intensité ou un second groupe de mesures d'intensité intervient après un intervalle de temps régulier dans la période de répétition de modulation du signal de champ électromagnétique et lorsque le signal de champ électromagnétique est sans modulation.

10. Procédé de mesure selon la revendication 9, **caractérisé en ce que** des troisième et quatrième mesures d'intensité ou des troisième et quatrième groupes de mesures d'intensité interviennent successivement à des intervalles de temps réguliers dans la période de répétition de modulation du signal de champ électromagnétique et lorsque le signal de champ électromagnétique est sans modulation, et **en ce que** des seconde, troisième et quatrième fenêtres (Tx 2, Tx 3, Tx 4) de transmission ou réception de signaux d'information du module à transpondeur sont définies respectivement après les seconde, troisième et quatrième mesures d'intensité ou les second, troisième et quatrième groupes de mesures d'intensité.

11. Procédé de mesure selon la revendication 10, **caractérisé en ce qu'**une transmission d'un paquet de mesures d'intensité ou de groupes de mesures d'intensité est effectuée depuis le module à transpondeur dans une quatrième fenêtre (Tx 4) de transmission ou réception de signaux d'information dans chaque période de répétition de modulation du signal de champ électromagnétique.

12. Procédé de mesure selon la revendication 10, **caractérisé en ce que** l'écart temporel entre chaque mesure d'intensité ou chaque groupe de mesures d'intensité est égal au quart de la période de répétition (te) de la modulation du signal de champ électromagnétique.

13. Procédé de mesure selon la revendication 12, **caractérisé en ce que** la période de répétition (te) est définie entre 10 ms et 20 ms avec une fréquence du signal de champ électromagnétique située entre 100 kHz et 150 kHz.

14. Procédé de mesure selon l'une des revendications précédentes, **caractérisé en ce qu'**une fois que le module à transpondeur a passé la ligne de passage, l'unité à décodeur (4) transmet un signal de commande à haute fréquence au module à transpondeur pour le désactiver.

15. Procédé de mesure selon la revendication 14, **caractérisé en ce que** l'unité à décodeur (4) transmet d'autres informations dans le signal à haute fréquence au module à transpondeur, ces autres informations concernant des informations relatives à un compétiteur, tel que son classement, son temps de course, sa disqualification.

16. Procédé de mesure selon la revendication 14, **caractérisé en ce que** l'unité à décodeur (4) transmet le signal de commande à haute fréquence au module à transpondeur (10) dans une première fenêtre de transmission après la première mesure d'intensité ou le premier groupe de mesures d'intensité du signal de champ électromagnétique du module à transpondeur dans chaque période de répétition (te) de modulation.

17. Procédé de mesure selon la revendication 1, **caractérisé en ce que** le module à transpondeur (10) transmet un signal de mesure à une fréquence porteuse située entre 300 MHz et 3'000 MHz à l'unité à décodeur (4) du système de mesure (1).

18. Procédé de mesure selon la revendication 1, **caractérisé en ce que** la fréquence porteuse du signal de mesure du module à transpondeur est sélectionnée parmi N fréquences porteuses à choix, où N est un nombre entier supérieur à 1.

19. Système de mesure (1) configuré pour la mise en oeuvre du procédé de mesure d'au moins un temps de passage à une ligne de passage (6) selon l'une des revendications précédentes, le système de mesure comprenant un ensemble de modules à transpondeur (10) susceptibles d'être portés chacun par un objet en mouvement et personnalisés chacun à un objet en mouvement, au moins une unité d'émission (2) d'un signal de champ électromagnétique basse fréquence (LF) par une antenne (3) disposée au niveau de la ligne de passage (6) et une unité à décodeur (4) agencée pour au moins recevoir au moins un signal de mesure à haute fréquence (UHF) de chaque module à transpondeur activé à proximité de la ligne de passage et pour la détermination d'un temps de passage de la ligne de passage (6) sur la base de ces mesures, le système de mesure étant configuré pour que chaque module à transpondeur (10) à proximité de la ligne de passage (6) soit agencé pour être activé par réception d'une commande de synchronisation et réveil modulée dans le signal de champ électromagnétique basse fréquence (LF), agencé pour ensuite effectuer des mesures d'intensité du signal de champ électromagnétique basse fréquence (LF) capté sans modulation, et transmettre ces mesures à l'unité à décodeur (4) avant le passage de la ligne de passage (6) de manière à permettre à l'unité à décodeur (4) d'être en mesure de déterminer le temps de passage avant le passage de la ligne de passage par le module à transpondeur (10) et ainsi pour prédire le temps réel de passage de la ligne de passage (6) sur la base de la variation d'intensité du champ électromagnétique des mesures reçues du module à transpondeur (10).

20. Système de mesure (1) selon la revendication 19, **caractérisé en ce que** l'antenne (3) d'émission du signal de champ électromagnétique basse fréquence (LF) est une antenne de côté disposée au niveau de la ligne de passage (6), et positionnée verticalement sur le côté d'un tracé de course.

21. Système de mesure (1) selon la revendication 20, **caractérisé en ce que** la dimension de cette antenne de côté peut être de 1 m sur 1 m ou inférieure pour détecter le passage de compétiteurs sur une largeur du tracé de course de maximum 10 m.

22. Système de mesure selon la revendication 19, **caractérisé en ce que** le module à transpondeur est du type actif et comprend une unité de gestion de puissance (18) pour l'activation du module à transpondeur dès la réception de la commande de synchronisation modulée dans le signal de champ électromagnétique.

23. Module à transpondeur (10) d'un système de mesure selon la revendication 22, **caractérisé en ce qu'**il comprend un émetteur/récepteur (16) en liaison au microcontrôleur (12) pour transmettre par l'antenne haute fréquence (15) un signal de mesure haute fréquence (UHF) ou recevoir un signal de commande à haute fréquence (UHF) d'une unité à décodeur (4) du système de mesure (1).

24. Module à transpondeur (10) selon la revendication 23, **caractérisé en ce que** l'antenne basse fréquence (13) est une antenne triaxiale pour la mesure selon trois axes, et **en ce que** l'antenne haute fréquence (15) est une antenne à boucle.

## Patentansprüche

1. Verfahren zum Messen mindestens einer Durchgangszeit bei einer Überquerungslinie (6) mindestens eines in Bewegung befindlichen Objekts über ein personalisiertes Transponder-Modul (10), das an dem in Bewegung befindlichen Objekt angebracht ist, im Verlauf eines Sportwettkampfs bei einem Messsystem (1), das mindestens eine Transponder-Modul (10), mindestens eine Einheit (2) zum Senden eines niederfrequenten elektromagnetischen Feldsignals (LF) über eine Antenne (3), die auf Höhe der Überquerungslinie (6) angeordnet ist, und eine Decodereinheit (4) zum Empfangen mindestens eines hochfrequenten Messsignals (UHF) von jedem Transponder-Modul in der Nähe der Überquerungslinie umfasst, weist das Verfahren die folgenden Schritte auf:
- Erzeugen eines niederfrequenten elektromagnetischen Feldsignals (LF) durch die Sendeeinheit (2), wobei das niederfrequente elektromagnetische Feldsignal (LF) eine Modulation für die Synchronisations- und Aufwachsteuerung am Beginn jeder Wiederholungsperiode (te) der Modulation für die Synchronisations- und Aufwachsteuerung enthält,
- Aktivieren jedes personalisierten Transponder-Moduls (10) ab dem ersten Empfang der modulierten Synchronisationssteuerung in dem niederfrequenten elektromagnetischen Feldsignal (LF) durch das personalisierte Transponder-Modul (10),
- Messen der Signalstärke des niederfrequenten elektromagnetischen Feldsignals (LF), das von dem Transponder-Modul erfasst wird, nach dem Aufwachen und Synchronisieren in regelmäßigen Zeitabständen durch das Transponder-Modul, indem wenigstens eine erste Messung der Stärke oder eine erste Gruppe von Messungen der Stärke in jeder Wiederholungsperiode (te) der Modulation des niederfrequenten elektromagnetischen Feldsignals (LF) beginnend nach dem Ende der Synchronisations- und Aufwachsteuerungsmodulation ausgeführt wird, wenn das niederfrequente elektromagnetische Feldsignal keine Modulation aufweist und durch die Sendeeinheit (2) mit konstanter Frequenz und konstanter Amplitude erzeugt wird,
- Senden durch das Transponder-Modul (10) mindestens jeder ersten Messung der Feldstärke oder mindestens jeder ersten Gruppe von Messungen der Feldstärke direkt zu der Decodereinheit (4) vor der Überquerung der Linie,
- Vorhersagen der tatsächlichen Durchgangszeit der Überquerung der Überquerungslinie (6) jedes Transponder-Moduls (10) durch die Decodereinheit (4) vor der Überquerung der Überquerungslinie (6) durch das Transponder-Modul (10) auf der Grundlage der Veränderung der elektromagnetischen Feldstärke der Messungen, die von dem Transponder-Modul empfangen wurden.

2. Messverfahren nach Anspruch 1, wobei jedes Transponder-Modul (10) des Messsystems (1) eine dreiachsige Antenne (13) umfasst, um die Signalstärke des niederfrequenten elektromagnetischen Feldes in drei Achsen zu messen und eine Gruppe von Intensitätsmessungen zu jeder definierten Messzeit zu liefern, **dadurch gekennzeichnet, dass** das Transponder-Modul (10) in einem Messsignal direkt jede Gruppe von durchgeführten Intensitätsmessungen oder ein Paket von verschiedenen Gruppen von durchgeführten Intensitätsmessungen nacheinander in regelmäßigen Zeitintervallen zu der Decodereinheit (4) sendet, um die Zeit der Überquerung der Überquerungslinie auf der Grundlage der Intensitätsänderung des elektromagnetischen Feldes der Messgruppen, die von dem Transponder-Modul erfasst werden, zu bestimmen.

3. Messverfahren nach Anspruch 2, **dadurch gekennzeichnet, dass** die erste Intensitätsmessung oder die erste Gruppe von Intensitätsmessungen in jeder Wiederholungsperiode (te) der Signalmodulation des niederfrequenten elektromagnetischen Feldes nach dem Ende der Dauer dieser ersten Modulation beginnt, wenn das niederfrequente elektromagnetische Feldsignal unmoduliert ist und von der Sendeeinheit (2) mit konstanter Frequenz und Amplitude erzeugt wird.

4. Messverfahren nach Anspruch 3, **dadurch gekennzeichnet, dass** ein erstes Fenster (Tx 1) zum Senden oder Empfangen von Signalen mit Informationsgehalt des Transponder-Moduls nach der ersten Intensitätsmessung oder der ersten Gruppe von Intensitätsmessungen festgelegt wird.

5. Messverfahren nach Anspruch 3, **dadurch gekennzeichnet, dass** eine zweite Datenmodulation pro Wiederholungsperiode der Modulation in dem elektromagnetischen Feldsignal, das durch die Sendeeinheit nach der ersten Intensitätsmessung oder der ersten Gruppe von Intensitätsmessungen erzeugt wird, stattfindet.

6. Messverfahren nach Anspruch 5, **dadurch gekennzeichnet, dass** die Daten in der zweiten Modulation des elektromagnetischen Feldsignals eine Information auf einer UHF-Kommunikationsfrequenz der Decodereinheit (4) zum Transponder-Modul (10) nach der Überquerung der Überquerungslinie betreffen.

7. Messverfahren nach Anspruch 5, **dadurch gekennzeichnet, dass** die Dauer der ersten Modulation gleich der Dauer der zweiten Modulation des elektromagnetischen Feldsignals ist.

8. Messverfahren nach einem der Ansprüche 1 und 5, **dadurch gekennzeichnet, dass** jede Modulation des elektromagnetischen Feldsignals eine Alles-oder-Nichts-Modulation ist.

9. Messverfahren nach Anspruch 3, **dadurch gekennzeichnet, dass** mindestens eine zweite Intensitätsmessung oder eine zweite Gruppe von Intensitätsmessungen nach einem regulären Zeitintervall in der Modulationswiederholungsperiode des elektromagnetischen Feldsignals stattfindet, falls das elektromagnetische Feldsignal unmoduliert ist.

10. Messverfahren nach Anspruch 9, **dadurch gekennzeichnet, dass** dritte und vierte Intensitätsmessungen oder dritte und vierte Gruppen von Intensitätsmessungen nacheinander in regelmäßigen Zeitintervallen in der Modulationswiederholungsperiode des elektromagnetischen Feldsignals auftreten, wenn das elektromagnetische Feldsignal nicht moduliert ist, und das zweite, dritte und vierte Fenster (Tx, 2, Tx 3, Tx 4) des Sendens oder Empfangens von Informationssignalen des Transponder-Moduls nach den zweiten bzw. dritten bzw. vierten Intensitätsmessung oder den zweiten bzw. dritten bzw. vierten Messgruppe der Intensität definiert sind.

11. Messverfahren nach Anspruch 10, **dadurch gekennzeichnet, dass** eine Übertragung eines Pakets von Intensitätsmessungen oder von Gruppen von Intensitätsmessungen vom Transponder-Modul in einem vierten Fenster (Tx 4) des Sendens oder Empfangens von Informationssignalen in jeder Modulationswiederholungsperiode des elektromagnetischen Feldsignals erfolgt.

12. Messverfahren nach Anspruch 10, **dadurch gekennzeichnet, dass** der zeitliche Abstand zwischen jeder Intensitätsmessung oder jeder Gruppe von Intensitätsmessungen gleich einem Viertel der Wiederholungsperiode (te) der Modulation des elektromagnetischen Feldsignals ist.

13. Messverfahren nach Anspruch 12, **dadurch gekennzeichnet, dass** die Wiederholungsperiode (te) zwischen 10 ms und 20 ms mit einer Frequenz des Signals des elektromagnetischen Feldes zwischen 100 kHz und 150 kHz definiert ist.

14. Messverfahren nach einem der vorhergehenden Ansprüche, **dadurch gekennzeichnet, dass** die Decodereinheit (4) ein Steuersignal mit hoher Frequenz an das Transponder-Modul sendet, um es zu aktivieren, sobald das Transponder-Modul die Überquerungslinie überquert hat.

15. Messverfahren nach Anspruch 14, **dadurch gekennzeichnet, dass** die Decodereinheit (4) weitere Informationen in das Signal mit hoher Frequenz an das Transponder-Modul überträgt, wobei diese weiteren Informationen Informationen über einen Teilnehmer, etwa seine Platzierung, seine Wettlaufzeit oder seine Disqualifikation enthalten.

16. Messverfahren nach Anspruch 14, **dadurch gekennzeichnet, dass** die Decodereinheit (4) das Steuersignal mit hoher Frequenz an das Transponder-Modul (10) in einem ersten Sendefenster nach der ersten Intensitätsmessung oder der ersten Gruppe von Intensitätsmessungen des elektromagnetischen Feldsignals des Transponder-Moduls in jeder Wiederholungsperiode (te) der Modulation überträgt.

17. Messverfahren nach Anspruch 1, **dadurch gekennzeichnet, dass** das Transponder-Modul (10) ein Messsignal mit einer Trägerfrequenz zwischen 300 MHz und 3000 MHz an die Decodereinheit (4) des Messsystems (1) sendet.

18. Messverfahren nach Anspruch 1, **dadurch gekennzeichnet, dass** die Trägerfrequenz des Messsignals des Transponder-Moduls aus N wählbaren Trägerfrequenzen ausgewählt wird, wobei N eine ganze Zahl größer als 1 ist.

19. Messsystem (1) konfiguriert für die Durchführung des Verfahrens zum Messen von mindestens einer Durchgangszeit der Überquerung einer Überquerungslinie (6) nach einem der vorhergehenden Ansprüche, wobei das Messsystem eine Gesamtheit von Transponder-Modulen (10), die jeweils von einem in Bewegung befindlichen Objekt getragen werden können und jeweils für ein in Bewegung befindliches Objekt personalisiert sind, mindestens eine Einheit (2) zum Senden eines niederfrequenten elektromagnetischen Feldsignals (LF) über eine auf Höhe der Überquerungslinie (6) angeordnete Antenne (3) und eine Decodereinheit (4), die dafür ausgelegt ist, mindestens ein hochfrequentes Messsignal (UHF) von jedem aktivierten Transponder-Modul in der Nähe der Überquerungslinie mindestens zu empfangen und eine Zeit der Überquerung der Überquerungslinie (6) auf der Grundlage dieser Messungen zu bestimmen, umfasst, wobei das Messsystem so konfiguriert ist, dass jedes Transponder-Modul (10) in der Nähe der Überquerungslinie (6) dafür ausgelegt ist, durch Empfangen einer Synchronisations- und Aufwachsteuerung, die in dem niederfrequenten elektromagnetischen Feldsignal (LF) moduliert ist, aktiviert zu werden, und dafür ausgelegt ist, anschließend Messungen der Intensität des niederfrequenten elektromagnetischen Feldsignals (LF), das unmoduliert aufgenommen wird, auszuführen und diese Messungen an die Decodereinheit (4) vor der Überquerung der Überquerungslinie (6) zu senden, derart, dass der Decodereinheit (4) ermöglicht wird, die Überquerungszeit vor der Überquerung der Überquerungslinie durch das Transponder-Modul (10) bestimmen zu können und somit die tatsächliche Zeit der Überquerung der Überquerungslinie (6) auf der Grundlage der Veränderung der Intensität des elektromagnetischen Feldes der empfangenen Messungen von dem Transponder-Modul (10) vorherzusagen.

20. Messsystem (1) nach Anspruch 19, **dadurch gekennzeichnet, dass** die Antenne (3) zum Aussenden des niederfrequenten elektromagnetischen Feldsignals (LF) eine Seitenantenne ist, die auf Höhe der Überquerungslinie (6) angeordnet ist und vertikal an der Seite einer Wettkampfbahn positioniert ist.

21. Messsystem (1) nach Anspruch 20, **dadurch gekennzeichnet, dass** die Abmessung dieser Seitenantenne 1 m mal 1 m oder weniger betragen kann, um den Durchgang von Wettkämpfern auf einer Breite der Wettkampfbahn von maximal 10 m zu erfassen.

22. Messsystem nach Anspruch 19, **dadurch gekennzeichnet, dass** das Transponder-Modul vom aktiven Typ ist und eine Leistungssteuerung (18) zur Aktivierung des Transponder-Moduls nach dem Empfang des Befehls zur modulierten Synchronisation in das Signal des elektromagnetischen Feldes umfasst.

23. Transponder-Modul (10) eines Messsystems nach Anspruch 22, **dadurch gekennzeichnet, dass** es einen Sender/Empfänger (16) in Verbindung mit dem Mikrocontroller (12) umfasst, um über die Hochfrequenzantenne (15) ein hochfrequentes Messsignal (UHF) zu senden oder ein hochfrequentes Steuersignal (UHF) einer Decodereinheit (4) des Messsystems (1) zu empfangen.

24. Transponder-Modul (10) nach Anspruch 23, **dadurch gekennzeichnet, dass** die Niederfrequenzantenne (13) eine Triaxialantenne für die Messung in drei Achsen ist, und dass die Hochfrequenzantenne (15) eine Schleifenantenne ist.

## Claims

1. Method for measurement of at least one crossing time at a line of passage (6) of at least one moving object by means of a personalised transponder module (10) placed on the moving object, during a sports competition in a measuring system (1), which includes at least one transponder module (10), at least one unit (2) for transmitting a low frequency (LF) electromagnetic field signal via an antenna (3) disposed on the line of passage (6) and a decoder unit (4) for receiving at least one high frequency (UHF) measurement signal from each transponder module in proximity to the line of passage, the method including the steps consisting in:
- generating a low frequency (LF) electromagnetic field signal by the transmission unit (2), the low frequency (LF) electromagnetic field signal comprising a modulation of a synchronisation and activation command at the start of each repetition period (te) of the modulation of the synchronisation and activation command,
- activating each personalised transponder module (10) on the first reception of the modulated synchronisation command in the low frequency (LF) electromagnetic field signal by the personalised transponder module (10),
- measuring the intensity of the low frequency (LF) electromagnetic field signal captured by the transponder module once activated and synchronised, at regular time intervals by the transponder module, by performing at least a first intensity measurement or a first group of intensity measurements in each repetition period (te) of the modulation of the low frequency (LF) electromagnetic field signal beginning after the end of the modulation of the synchronisation and activation command, when the low frequency electromagnetic field signal is without modulation and generated with constant frequency and amplitude by the transmission unit (2),
- transmitting directly via the transponder module (10) at least each first intensity measurement or at least each first group of intensity measurements to the decoder unit (4) before the crossing of the line,
- predicting the actual crossing time of each transponder module (10) of the line of passage (6) by the decoder unit (4) before the crossing of the line of passage (6) via the transponder module (10) on the basis of the variation in the electromagnetic field intensity of the measurements received from the transponder module.

2. Measuring method according to claim 1, for which each transponder module (10) of the measuring system (1) includes a triaxial antenna (13) for measuring the intensity of the low frequency electromagnetic field signal on three axes and providing a group of intensity measurements at each defined measurement time, **characterised in that** the transponder module (10) directly transmits in a measurement signal each group of intensity measurements performed or a packet of different groups of intensity measurements performed successively at regular time intervals to the decoder unit (4) for determination of a crossing time on the line of passage on the basis of the variation in the electromagnetic field intensity of the groups of measurements received from the transponder module.

3. Measuring method according to claim 2, **characterised in that** the first intensity measurement or the first group of intensity measurements in each modulation repetition period (te) of the low frequency electromagnetic field signal modulation starts after the end of the duration of this first modulation, when the low frequency electromagnetic field signal is without modulation and generated at a constant frequency and amplitude by the transmission unit (2).

4. Measuring method according to claim 3, **characterised in that** a first window (Tx 1) for transmission or reception of information signals from the transponder module is defined after the first intensity measurement or the first group of intensity measurements.

5. Measuring method according to claim 3, **characterised in that** a second modulation of data occurs per modulation repetition period in the electromagnetic field signal generated by the transmission unit after the first intensity measurement or the first group of intensity measurements.

6. Measuring method according to claim 5, **characterised in that** the data in the second modulation of the electromagnetic field signal concerns information about a UHF communication frequency from the decoder unit (4) to the transponder module (10) after the crossing of the line of passage.

7. Measuring method according to claim 5, **characterised in that** the duration of the first modulation is equal to the duration of the second modulation of the electromagnetic field signal.

8. Measuring method according to any of claims 1 and 5, **characterised in that** each modulation of the electromagnetic field signal is an OOK modulation.

9. Measuring method according to claim 3, **characterised in that** at least a second intensity measurement or a second group of intensity measurements occurs after a regular time interval in the modulation repetition period of the electromagnetic field signal and when the electromagnetic field signal is without modulation.

10. Measuring method according to claim 9, **characterised in that** third and fourth intensity measurements or third and fourth groups of intensity measurements occur successively at regular time intervals in the modulation repetition period of the electromagnetic field signal and when the electromagnetic field signal is without modulation, and **in that** second, third and fourth windows (Tx 2, Tx 3, Tx 4) for transmission or reception of information signals from the transponder module are defined respectively after the second, third and fourth intensity measurements or the second, third and fourth groups of intensity measurements.

11. Measuring method according to claim 10, **characterised in that** a transmission of a packet of intensity measurements or of groups of intensity measurements is performed from the transponder module in a fourth window (Tx 4) for transmission or reception of information signals in each modulation repetition period of the electromagnetic field signal.

12. Measuring method according to claim 10, **characterised in that** the time gap between each intensity measurement or each group of intensity measurements is equal to a quarter of the modulation repetition period (te) of the electromagnetic field signal.

13. Measuring method according to claim 12, **characterised in that** the repetition period (te) is defined between 10 ms and 20 ms at a frequency of the electromagnetic field signal of between 100 kHz and 150 kHz.

14. Measuring method according to any of the preceding claims, **characterised in that** once the transponder module has crossed the line of passage, the decoder unit (4) transmits a high frequency control signal to the transponder module in order to deactivate the module.

15. Measuring method according to claim 14, **characterised in that** the decoder unit (4) transmits other information in the high frequency signal to the transponder module, this other information concerning information relating to a competitor, such as his ranking, his race time, or his disqualification.

16. Measuring method according to claim 14, **characterised in that** the decoder unit (4) transmits the high frequency control signal to the transponder module (10) in a first transmission window after the first intensity measurement or the first group of intensity measurements of the electromagnetic field signal from the transponder module in each modulation repetition period (te).

17. Measuring method according to claim 1, **characterised in that** the transponder module (10) transmits a measurement signal at a carrier frequency of between 300 MHz and 3000 MHz to the decoder unit (4) of the measuring system (1).

18. Measuring method according to claim 1, **characterised in that** the carrier frequency of the measurement signal from the transponder module is selected from N carrier frequencies, where N is an integer number greater than 1.

19. Measuring system (1) configured for implementation of the method for measurement of at least one crossing time at a line of passage (6) according to any of the preceding claims, the measuring system including a set of transponder modules (10) each capable of being carried by a moving object and each personalised to a moving object, at least one unit (2) for transmission of a low frequency (LF) electromagnetic field signal via an antenna (3) disposed on the line of passage (6) and a decoder unit (4) arranged to at least receive at least one high frequency (UHF) measurement signal from each activated transponder module in proximity to the line of passage and to determine a crossing time on the line of passage (6) on the basis of these measurements, the measurement system being configured for each transponder module (10) in proximity to the line of passage (6) to be arranged to be activated by reception of a modulated synchronisation and activation command in the low frequency (LF) electromagnetic field signal, then arranged to perform intensity measurements of the captured low frequency (LF) electromagnetic field signal without modulation and to transmit these measurements to the decoder unit (4) before the crossing of the line of passage (6) so as to allow the decoder unit (4) to be able to determine the crossing time before the crossing of the line of passage by the transponder module (10) and thus to predict the actual crossing time on the line of passage (6) on the basis of the variation in the electromagnetic field intensity of the measurements received from the transponder module (10).

20. Measuring system (1) according to claim 19, **characterised in that** the transmission antenna (3) of the low frequency (LF) electromagnetic field signal is a side antenna disposed on the line of passage (6), and positioned vertically on the side of a race course or track.

21. Measuring system (1) according to claim 20, **characterised in that** the dimension of this side antenna may be 1 m × 1 m or less to detect the passing of competitors on a maximum race course or track width of 10 m.

22. Measuring system according to claim 19, **characterised in that** the transponder module is of the active type and includes a power handling unit (18) for activation of the transponder module on reception of the modulated synchronisation command in the electromagnetic field signal.

23. Transponder module (10) of a measuring system according to claim 22, **characterised in that** it includes a transmitter/receiver (16) in association with the microcontroller (12) for transmitting through the highfrequency antenna (15) a high frequency (UHF) measurement signal or receiving a high frequency (UHF) control signal from a decoder unit (4) of the measuring system (1).

24. Transponder module (10) according to claim 23, **characterised in that** the low frequency antenna (13) is a triaxial antenna for measurement on three axes, and **in that** the high frequency antenna (15) is a loop antenna.
